Europäisches Patentamt

(19) European Patent Office

Office européen des brevets

(11) Publication number: **0 021 839**
A2

(12)

# EUROPEAN PATENT APPLICATION

(21) Application number: **80302160.9**

(22) Date of filing: **27.06.80**

(51) Int. Cl.³: **B 62 M 9/10**

(30) Priority: **28.06.79 JP 91178/79 U**

(43) Date of publication of application:
**07.01.81 Bulletin 81/1**

(84) Designated Contracting States:
**BE DE FR GB IT**

(71) Applicant: **SHIMANO INDUSTRIAL COMPANY LIMITED**
**77, 3-cho Oimatsu-cho Sakai-shi**
**Osaka(JP)**

(72) Inventor: **Shimano, Keizo**
**81, 3-cho, Minamimachi Midorigaoka**
**Sakai-shi Osaka(JP)**

(74) Representative: **Szczuka, Jan Tymoteusz et al,**
**Cruikshank & Fairweather 19 Royal Exchange Square**
**Glasgow G1 3AE Scotland(GB)**

(54) Sprocket for multi-stage cycle sprocket assembly.

㊼ This invention relates to a sprocket for a multistage sprocket-assembly for use in a speed changing device for a cycle by means of which device a drive chain (3) is switched from one said sprocket (A) to another (B), said sprocket comprising a sprocket body (1) having a circumferentially extending plurality of peripherally disposed sprocket teeth (11) each said tooth (11) tapering from its base towards its tip (11a).

In order to reduce interference between the drive chain (3) and the sprocket teeth (11) during gear changing at least one said tooth (11) has a chamfer (12) at the corner between the top radially outer edge (11e) of the tooth (11) and the front edge (11c) thereof with respect to the forward direction of rotation of the sprocket, said chamfer (12) extending from the top edge (11e) at or in proximity to a longitudinally intermediate point of the tooth (11).

FIG. 1

## SPROCKET FOR MULTI-STAGE CYCLE SPROCKET ASSEMBLY

This invention relates to a sprocket for a multi-stage sprocket-assembly for use in a speed changing device for a cycle by means of which device a drive chain is switched from one said sprocket to another, said sprocket comprising a sprocket body having a circumferentially extending plurality of peripherally disposed sprocket teeth each said tooth tapering from its base towards its tip.

Generally, a speed changing device for a cycle comprises a multi-stage sprocket assembly having two or more sprockets of different diameters and a derailleur device for switching a drive chain from one sprocket to another for changing gear.

The sprocket teeth are tapered from the base thereof towards the tips at the leading and trailing edges with respect to the direction of rotation of the sprocket and are disposed in alignment with and parallel to the plane of the plate-form sprocket body. Therefore, the chain, when it is moved axially of the sprocket for switching by the derailleur especially in the direction from the smaller diameter sprocket to the larger diameter one, is pushed at its link plates towards the lateral side of the larger diameter sprocket so that connecting pins which project from the link plates or side edges of the outer link plates are caught and raised by the side edges of sprocket teeth of the larger diameter sprocket. The lateral sides of the teeth of the larger diameter sprocket, however, interfere with the outer link plates of the drive chain thereby to prevent the chain from moving axially of the sprocket. Consequently, the pins or outer link plates caught by the side edges of the teeth are apt to be displaced from the teeth due to the above mentioned interference, thereby resulting in idling and/or the generation of noise. Also, since the chain is raised up out of engagement with the sprocket teeth to eventually become completely disengaged from the smaller diameter sprocket, when said chain subsequently engages the larger diameter sprocket it does so more o less all at once with the result that the rider experiences a distinct jarring shock.

It is an object of the present invention to minimise one or more of the above mentioned disadvantages.

According to the present invention there is provided sprocket for a multi-stage sprocket-assembly for use in a spee changing device for a cycle by means of which device a drive chain is switched from one said sprocket to another said sproc comprising a sprocket body having a circumferentially extendin plurality of peripherally disposed sprocket teeth each said to tapering from its base towards its tip characterized in that a least one said tooth has a chamfer at the corner between the t radially outer edge of the tooth and the front edge thereof wi respect to the forward direction of rotation of the sprocket, said chamfer extending from the top edge at or in proximity to a longitudinally intermediate point of the tooth.

This invention extends to both front sprockets for mounting on a crank of the cycle and rear sprockets for mounting on a rear hub of the cycle.

It has been found that a link plate of the chain which is raised by the side edge of a tooth of the larger diameter sprocket during gear-changing interferes with the lateral side of an adjacent tooth on the rearward side with respect to the direction of rotation of the sprocket. By providing such a sprocket tooth with a chamfer in accordance with the invention this interference is minimized thereby reducing shock during gear-changing, as well as idling and noise generation.

In greater detail, the sprocket teeth, which are tapered towards the tips at both front and rear side edges with respect to the direction of rotation of the sprocket when driven by or driving a chain, are further cut down at the corners between the top edges and the front side edges in slantwise manner towards the bottom thereof from the intermediate points of the top edges in the direction of rotation of the sprocket body, thereby forming triangular cutouts or chamfers. The provision of the cutouts substantially avoids the interference of the sprocket teeth with the link plates of the drive chain during chain switching, thereby improving gear changing efficiency and eliminating noise or the uncomfortable feeling experienced by the rider as a result of the shock given to him.

Further preferred features and advantages of the invention will appear from the following description given by way of example of three preferred embodiments illustrated with reference to the accompanying drawings in which:

Fig. 1 is a front view of a first embodiment of a sprocket of the invention;

Figs. 2 to 4 are enlarged front views of individual sprocket teeth, in which Figures

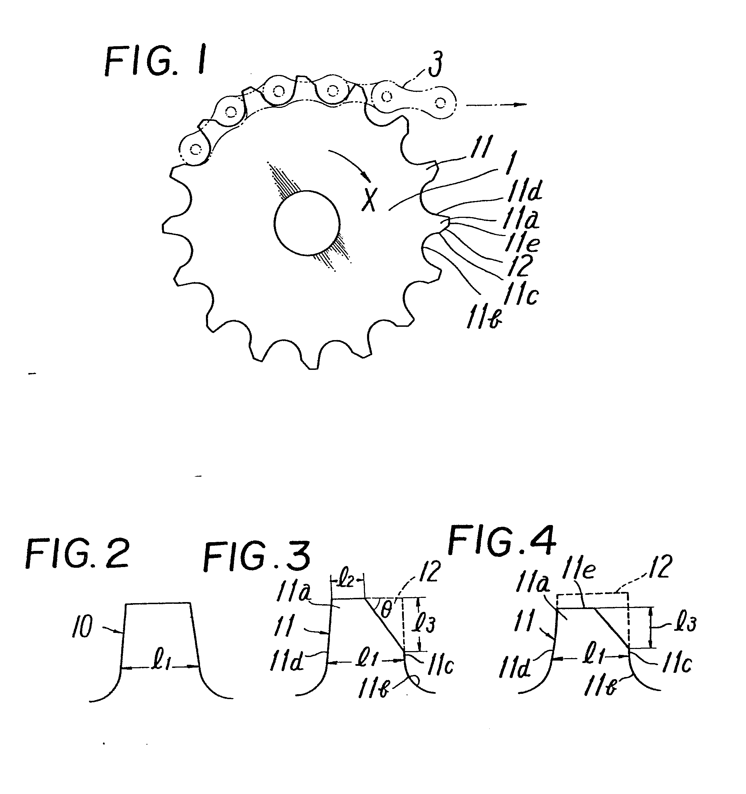

Fig. 2 shows a conventional tooth,

Fig. 3 shows a tooth of the first embodiment of Fig. 1, and

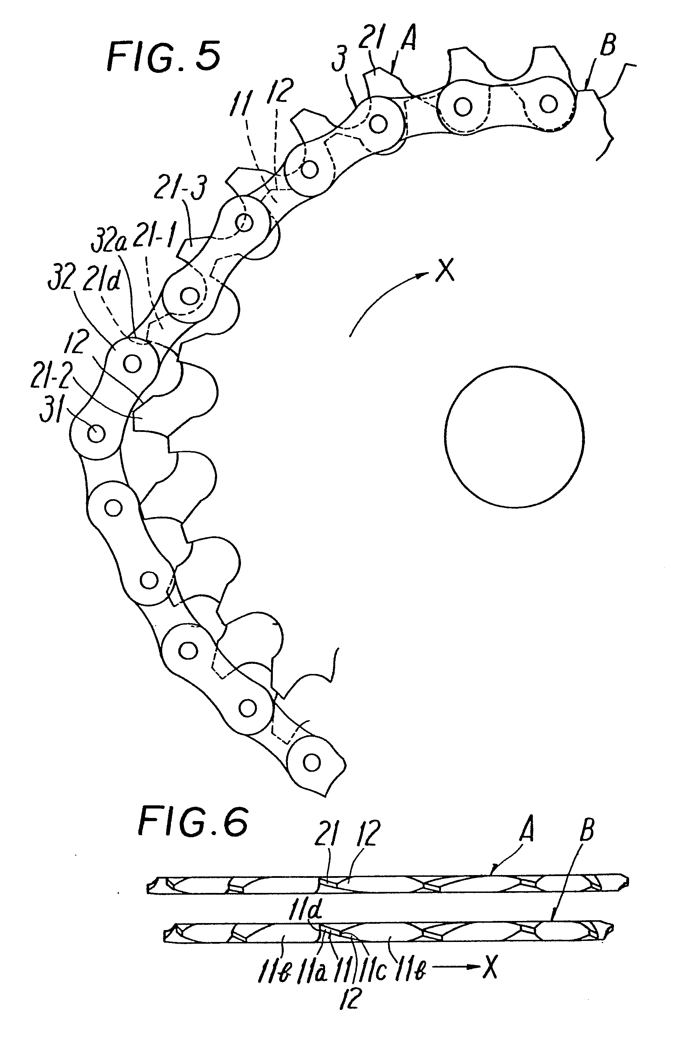

Fig. 4 shows a tooth of a second embodiment of the invention;

Fig. 5 is a view illustrating switching of a drive chain on a multi-stage sprocket assembly having two sprockets of the type shown in Fig. 1; and

Fig. 6 is a view showing part of a multi-stage sprocket-assembly including a third embodiment of a sprocket of the invention.

Fig. 1 shows a generally plate-form sprocket body 1 provided at its outer periphery with a plurality of teeth 11, all the teeth 11 being chamfered at the corners on their leading sides (i.e. the non-driven sides) with respect to the direction of rotation $X$ of the sprocket body 1 so that the leading sides of the teeth have inclined faces 12 extending slantwise from the tips 11a towards the grooves 11b between adjacent teeth.

The teeth 11 are, as in the case of the conventional type teeth 10 shown in Fig. 2, tapered towards their tips

11$\underline{a}$ from the grooves 11$\underline{b}$ between the front and rear side edges 11$\underline{c}$ and 11$\underline{d}$ (with respect to the direction of rotation of the sprocket body 1 when driven) of adjacent sprocket teeth 11. The shape and form of the chamfering required to adapt conventional teeth into conformity with the invention is shown in Fig. 3.

In Fig. 3, a tooth 11 is chamfered at a corner thereof between its front or leading side edge 11$\underline{c}$ and its top (radially outer) edge 11$\underline{e}$, slantwise towards the tooth bottom 11$\underline{b}$ from the top edge 11$\underline{e}$ at or in proximity to a longitudinally intermediate point of the tooth 11 with respect to direction of rotation of the sprocket body 1, thereby forming the chamfer 12. In detail, the tooth 11, similarly to the conventional tooth 10 shown in Fig. 2, is 4 mm in length $\underline{l}$ near its base in the direction of rotation of the sprocket body 1. The tooth 11 is chamfered at its leading top corner to form an incline extending from and below the top edge 11$\underline{e}$ of the tooth at an angle $\theta$ of 50 degrees to an extension of the top edge 11$\underline{c}$ in the direction of rotation of the sprocket body 1. The remaining portion of the top edge 11$\underline{e}$ (i.e. between the trailing side edge 11$\underline{d}$ and the chamfer 12) has a width $l_2$ (= 2mm). The depth $l_3$ of the chamfer has a value of 3mm.

In Fig. 4, the tooth 11 shown in Fig. 3 has a reduced overall height, its top edge being lowered by 1mm so that the chamfer 12 has a depth $l_3$ of only 2mm.

A multi-stage sprocket assembly comprising a larger sprocket and a smaller sprocket constructed generally as above will now be described.

For the sake of convenience the smaller diameter sprocket is designated $\underline{A}$ and the larger diameter sprocket $\underline{B}$, the teeth of sprocket $\underline{A}$ and sprocket $\underline{B}$ being numbered 11 and 21, respectively.

Switching of the drive chain from one sprocket of the multi-stage sprocket assembly to another will now be described.

Referring to Fig. 5, there is shown a rear multi-stage sprocket assembly mounted on a rear hub of a cycle. The chain 3 is pushed towards the sprocket B by a rear derailleur for switching from sprocket A to sprocket B, whereby link plates of the chain 3 contact the axially inner side of sprocket B. Hence, a pin 31 or the leading edge 32a of the outer link plate 32 in the direction of movement thereof, opposite the axially inner side of sprocket B, is caught and raised by the trailing edge 21d of a tooth 21-1 on the sprocket B.

At this stage, the outer link plate 32 tends to interfere with the lateral side of an adjacent tooth 21-2 positioned rearwardly, with respect to the direction of rotation X, of the tooth 21-1. The tooth 21-2, however, has the chamfer 12 which enables the outer link plate 32 to pass thereover without interfering with the front corner of the tooth.

Hence, an outer link plate next to the outer link plate 32 caught and raised by the rear edge 21d of tooth 21-1, will ride over and then engage with the tooth 21-2 next to the tooth 21-1, whereby the number of links of the chain 3 that are raised up out of engagement with the teeth 21 is reduced. In other words, the number of links riding on top of the teeth 21 of the sprocket B instead of in intermeshed engagement therewith is reduced so that switching of the chain is completed within a smaller peripheral distance or rotational angle of the sprocket assembly.

In an experiment with a smaller diameter sprocket A which has 15 teeth and a larger diameter sprocket B which has 16 teeth there were provided teeth 11 and 21 with chamfers 12 cut slantwise at an angle of 50 degrees. During switching of the chain 3 with a derailleur device it was found that the number of links riding on top of the teeth until the chain 3 is completely switched to the other sprocket B (see Fig. 5) has been restricted to 5 at a minimum. This number is smaller in number by some 3 to 4 links than in the case of a conventional sprocket.

Therefore, the chain 3 can be switched to the sprocket B more rapidly and with a smaller number of disengaged or raised links, thereby changing speed more smoothly with less shock and reducing the generation of noise and occurrence of idling during changing of speed.

Furthermore, when using teeth 11 which are reduced in height as shown in Fig. 4, the number of links to be raised can be still further reduced thereby to provide an even smoother speed change, and the chain 3 smoothly disengages from the sprocket B when switched therefrom to the sprocket A. In other words, the chain 3, when disengaged from the sprocket B, rides over the lower teeth 21 thereof and moves less, radially of the sprocket. As a result, the chain 3 is smoothly disengageable from the sprocket B, and, when it is shifted to the sprocket A, experiences less of a fall onto the sprocket A, thereby reducing shock during changing of the cycle speed.

It will be appreciated that whilst preferably all the teeth 11 and 21 have chamfers 12, this is not essential.

In the above construction, the sprocket teeth 11 and 21, especially the teeth 21 on the sprocket body 1 of the smaller sprocket B, may be inclined at their tips at an angle to the plane of the sprocket body in such a manner that the rear side 11d (see Fig. 6) of the tip 11a of each of the teeth 11 is disposed in a direction away from the sprocket A.

In this case during chain switching as shown in Fig. 5, even if the chain 3 does interfere with a tooth 21-3 which is positioned forwardly of the tooth 21-2 in the direction of driven rotation of the sprocket body 1 and avoids the interference with the chain 3 through the chamfer 12, the chain 3 is easy to move towards the slanted side of the tip of the tooth 21-3, that is, in the direction of slanting away from the sprocket A, thereby switching the chain 3 more efficiently.

As will be clearly understood from the above description, sprockets of the present invention are simple in construction and enable a drive chain to be switched smoothly and rapidly, especially in the direction from the smaller diameter sprocket to the larger diameter one. Furthermore, the rider, when switching the chain, feels less of a shock, and the generation of noise and occurrence of idling are also reduced.

CLAIMS

1.  A sprocket for a multi-stage sprocket-assembly for use in a speed changing device for a cycle by means of which device a drive chain (3) is switched from one said sprocket (A) to another (B), said sprocket comprising a sprocket body (1) having a circumferentially extending plurality of peripherally disposed sprocket teeth (11) each said tooth (11) tapering from its base towards its tip (11a) characterized in that at least one said tooth (11) has a chamfer (12) at the corner between the top radially outer edge (11e) of the tooth (11) and the front edge (11c) thereof with respect to the forward direction of rotation of the sprocket, said chamfer (12) extending from the top edge (11e) at or in proximity to a longitudinally intermediate point of the tooth (11).

2.  A sprocket according to claim 1, wherein each of the sprocket teeth (11) of the sprocket has a said chamfer (12).

3.  A sprocket according to claim 1 or claim 2, wherein said tooth (11) having a said chamfer (12) has a reduced height from its base to its tip (11a).

4.  A sprocket according to any one of claims 1 to 3 wherein said chamfer (12) is inclined to an extension of the top edge (11e) at an angle ($\theta$) thereto, which angle has a value of 50 degrees.

5.  A sprocket according to any one of claims 1 to 4, wherein the tips (11a) of the sprocket teeth (11) are inclined at an angle to the plane of the sprocket.

6.  A sprocket according to claim 5 wherein said sprocket teeth (11) are inclined at an angle relative to the forward direction of rotation of the sprocket (A) such that when said sprocket (A) is mounted in a sprocket assembly with a smaller diameter sprocket (B), the rear side (11d) of said tip (11a) of each said tooth (11) with respect to the direction of rotation of said sprocket (A) is disposed in a direction away from said smaller diameter sprocket (B).

7.    A sprocket according to any one of the preceding claims when mounted in a multi-stage sprocket assembly.

FIG. 1

FIG. 2   FIG. 3   FIG. 4

FIG.5

FIG.6